# EUROPÄISCHE PATENTSCHRIFT

(11) **EP 1 468 612 B1**
(45) Veröffentlichungstag und Bekanntmachung des Hinweises auf die Patenterteilung: **12.04.2006**
(21) Anmeldenummer: 04009235.5
(22) Anmeldetag: 19.04.2004
(51) Int. Cl.: A21D 13/00, A23G 3/00

(54) **Verfahren zum Dekorieren von Oberflächen von Lebensmittelprodukten und an der Oberfläche dekorierte Lebensmittelprodukte**
Process for decoration of food surfaces and the decorated foods thereof
Procédé pour décoration des surfaces d'alimentations et les alimentations décorées

(30) Priorität: 18.04.2003 IT BO20030230
(43) Veröffentlichungstag der Anmeldung: 20.10.2004
(73) Patentinhaber: Lesepidado Srl, 40139 Bologna (IT)
(72) Erfinder: Setti, Leonoardo, Prof. c/o Lesepidado srl, 40139 Bologna (IT); Piana, Chiara, Dott. c/o Lesepidado srl, 40139 Bologna (IT)
(74) Vertreter: Beszédes, Stephan G.

(56) Entgegenhaltungen:
- WO-A-95/01735
- WO-A-03/031082
- US-A- 3 111 411
- US-A- 4 531 292
- US-A- 4 670 271

## Beschreibung

### Gebiet der Technik

Die vorliegende Erfindung betrifft die Technik der Durchführung des Dekorierens auf der Oberfläche von Lebensmittelprodukten.

### Stand der Technik

Es sind verschiedene Verfahren zum Dekorieren von Lebensmitteln, beispielsweise Torten, Keksen, Schokolade oder dergleichen, bekannt. Mit solchen Verfahren können direkte oder indirekte Dekorationen auf der Oberfläche von Lebensmitteln erhalten werden. Bei der direkten Dekoration werden Farben oder Farbpasten verwendet, die in Abhängigkeit von den chemisch--physikalischen Eigenschaften der Oberflächen der zu dekorierenden Lebensmittel speziell entwickelt wurden. Im Patentschrifttum sind verschiedene Arten von Anlagen zum Dekorieren von Keksen, die sich Stempelverfahren oder Strahlverfahren mittels spezieller Einspritzdüsen oder Spritzen bedienen, beschrieben. Solche Verfahren sind im allgemeinen sehr kostspielig, wenig flexibel und haben eine geringe Farbauflösung und Farbaufnahme durch die Lebensmittel. Ferner erfordern diese Verfahren eher teuere Klischees, die keine schnellen kundenspezifischen Anpassungen zulassen. Das indirekte Dekorieren hingegen sieht die Verwendung von verschiedenen, vorab dekorierten Materialien vor, die auf die Oberfläche der Lebensmittel aufgebracht werden. Das Patentschrifttum kennt Folien auf Stärke- oder Zuckerbasis, die mittels Tintenstrahlverfahren oder Siebdruckverfahren auf Torten oder Halbgefrorenes aufgedruckt werden. Ferner sind Transfertechniken zum Dekorieren von Schokolade mit Hilfe von Filmen auf Fettstoffbasis bekannt, die im Siebdruckverfahren mit farbigen Butterpasten dekoriert werden.

Aus US 4 670 271 A ist eine Kassette zum Bedrucken von Lebensmitteln zur Verwendung in Verbindung mit einem Verfahren und einer Vorrichtung zum Auftragen von Bildern auf Lebensmittel, umfassend einen Schreibstift zur Verwendung zur Übertragung von Bildern, bei welchen auf ein Blatt, umfassend ein biegsames Material aus Papier oder Polymer ein eßbares Färbematerial, umfassend eine hydrophile Farbe aufgebracht wird, welches nach dem Trocknen einen Überzug auf dem genannten biegsamen Blatt von einem Lebensmittel bildet, aufgebracht wird, bekannt. Das hydrophile Material wird also zusammen mit der Farbe aufgebracht, es ist keine Rede vom Aufbringen eines hydrophilen Mediums vor dem Aufbringen der Dekoration.

In WO 95/01735 A ist ein verstärkter eßbarer Film zur Verwendung zum Vorsehen einer Dekoration eines Lebensmittels, umfassend einen eßbaren Film und ein mit Lebensmitteln verträgliches Substrat, welches am eßbaren Film lösbar haftet, wobei der eßbare Film vom Substrat abschälbar ist, beschrieben. Der eßbare Polymerfilm kann Hydroxypropylmethyleellulose, das heißt ein hydrophiles Material enthalten. Dieses hydrophile Material ist jedoch in der Dekoration enthalten und nicht als eigene Vorbehandlungsschicht bildend auf dem Lebensmittel.

Aus US 3 111 411 A ist ein Verfahren zur Herstellung von dekorativen Zusammensetzungen, umfassend das Herstellen eines Semigeles durch Umsetzen eine hydrophilen Kolloides und eines Metallpigmentes einer wasserlöslichen Kohlenteerfarbe und Aussetzen des Semigeles Metallionen, welche das Semigel zu einem festen fortgeschrittenen Gel umzuwandeln vermögen, bekannt. Auch hier befindet sich die hydrophile Substanz in der Farbe und nicht in einer vor dem Aufbringen der Farbe aufgebrachten eigenen Schicht.

Der Erfindung liegt die Aufgabe zugrunde, ein Verfahren zum Dekorieren von Oberflächen von Lebensmittelprodukten und dabei auch solcher mit poröser und/oder rauher Oberfläche, auf welcher bei den bekannten Verfahren die Farbe verfließt bzw. verschwimmt und dadurch die Dekoration unansehnlich, unscharf wird, mit hoher Farbauflösung und Farbaufnahme sowie an der Oberfläche dekorierte Lebensmittelprodukte, erhältlich durch dieses Verfahren, zu sehaffen.

Das Obige wurde durch die Erfindung erreicht.

### Beschreibung der Erfindung

Gegenstand der Erfindung ist ein Verfahren zum Dekorieren von Oberflächen von Lebensmittelprodukten durch Aufbringen der Dekoration und eines hydrophilen Mediums auf die Oberfläche des Lebensmittelproduktes, bei welchem man das Aufbringen des hydrophilen Mediums als Vorbehandlung vor dem Aufbringen der Dekoration durchführt und es unter Bildung eines Oberflächenüberzugsfilmes oder -geles trocknet.

Das ist ein Verfahren zur Vorbereitung der Oberfläche beliebiger, für die Aufnahme von Dekorationen mit hoher Farbauflösung und Farbaufnahme von Lebensmitteln die, da sie mit einem computergesteuerten Tintenstrahldrucker durchgeführt werden können, nicht eintönig sind. Mit diesem Verfahren lassen sich in einem einzigen Verarbeitungsschritt Dekorationen auf unterschiedlichen Lebensmittelproduktoberflächen, beispielsweise auf Keksen, Snacks, Schokolade, Salzgebäck, oder ähnlichen Produkten durchführen, wodurch sich eindeutige wirtschaftliehe Vorteile mit beachtlichen, ästhetischen Wirkungen ergeben.

Die Vorbehandlung des Lebensmittelproduktes, wie des Kekses, mit einem hydrophilen Medium unter Bildung einer entsprechenden Oberflächenüberzugsschicht nach dem Trocknen hat gegenüber einer gleichzeitigen Behandlung mit einer hydrophilen Substanz und einer Farbe in ein und demselben Medium den Vorteil, daß das Lebensmittelprodukt, wie der Keks, befähigt wird, die Farbe, insbesondere auch eine solche auf wäßriger Basis, zur Dekoration des Lebensmittelproduktes, welche auf wäßriger Grundlage ist, gut aufzunehmen.

Besonders große Vorteile bringt das erfindungsgemäße Verfahren im Falle des Dekorierens von Lebensmittelprodukten mit poröser und/oder rauher Oberfläche mit sich. Zum einen bedeckt der Oberflächenüberzugsfilm aus der hydrophilen Substanz mit seinem unteren Teil die Poren des Lebensmittelproduktes. Der obere Teil dieses Oberflächenüberzugsfilmes ist wiederum befähigt, das Wasser, welches die Basis der Farbe zum Dekorieren des Lebensmittelproduktes ist, zu absorbieren. Anders ausgedrückt hat die Hydrophilität eine 2-fache Funktion, das heißt unten zum Bedecken der Poren des Lebensmittelproduktes und oben zum Anziehen und Anhaftenlassen der Farbe und zu deren sofortigem Trocknen. Das ist der Grund, weswegen der Oberflächenüberzugsfilm, welcher vor dem Dekorieren mit der Farbe aufgebracht wird, hydrophil sein muß.

Als Farben werden zweckmäßig solche auf wäßriger Basis eingesetzt. Vorteilhaft führt man das Aufbringen der Dekoration auf den Oberflächenüberzugsfilm mit Hilfe des Tintenstrahlverfahrens mit Lebensmittelfarben auf wäßriger Basis durch.

Nach einer zweckmäßigen Ausführungsform des erfindungsgemäßen Verfahrens setzt man als Oberflächenüberzugsfilm einen solchen aus für die Lebensmittelanwendung geeigneten und/oder eßbaren hydrophilen Materialien und/oder Lebensmittelprodukten, die das in der Farbe enthaltene Wasser aufzunehmen und die Farbstoffe auf der Oberfläche des Lebensmittelproduktes zu fixieren vermögen, ein.

Nach einer bevorzugten Ausführungsform des erfindungsgemäßen Verfahrens verwendet man als Oberflächenüberzugsfilm einen solchen aus einem oder mehr Polysaccharid(en), insbesondere [einer], gegebenenfalls modifizierten, Stärke(n) und/oder Cellulose(n) und/oder Pektin(en) und/oder dessen/deren Derivat(en).

Nach einer anderen bevorzugten Ausführungsform des erfindungsgemäßen Verfahrens verwendet man als Oberflächenüberzugsfilm einen solchen aus einem oder mehr Protein(en), insbesondere Gelatine und/oder Fischleim.

Nach einer speziellen vorteilhaften Ausführungsform des erfindungsgemäßen Verfahren verwendet man als Oberflächenüberzugsfilm einen solchen, welcher weiße oder farbige Lebensmittelpigmente oder Kombinationen von solchen enthält.

Nach einer weiteren speziellen vorteilhaften Ausführungsform des erfindungsgemäßen Verfahrens verwendet man als Lebensmittelprodukte solche mit poröser und/oder rauher Oberfläche, insbesondere Kekse, Waffeln, sonstige Backwaren oder Salzgebäck.

Nach einer zweckmäßigen Ausführungsform des erfindungsgemäßen Verfahrens bäckt man das Lebensmittelprodukt, auf dessen behandelter Oberfläche die Dekorationen im Tintenstrahlverfahren mit Lebensmittelfarbe auf wäßriger Basis durchgeführt worden ist, im Ofen.

Gegenstand der Erfindung sind auch Lebensmittelprodukte, erhältlich durch das erfindungsgemäße Verfahren.

Nachfolgend wird die Erfindung unter Bezugnahme auf die beiliegenden Zeichnungen näher erläutert.

Es zeigen:

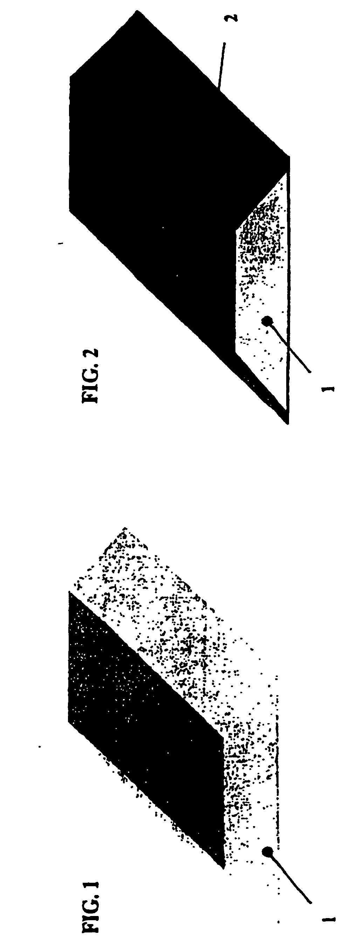

- Fig. 1: ein übliches Lebensmittelprodukt 1, wie beispielsweise Keks, Schokolade, Waffel, sonstige Backware oder Salzgebäck,
- Fig. 2: schematisch die mit einer hydrophilen Substanz zur Lebensmittelanwendung unter Bildung eines durchsichtigen oder deckenden Filmes oder Geles 2 bei Zugabe von speziellen farbigen oder weißen Lebensmittelpigmenten behandelte Oberfläche eines üblichen Lebensmittelproduktes 1,

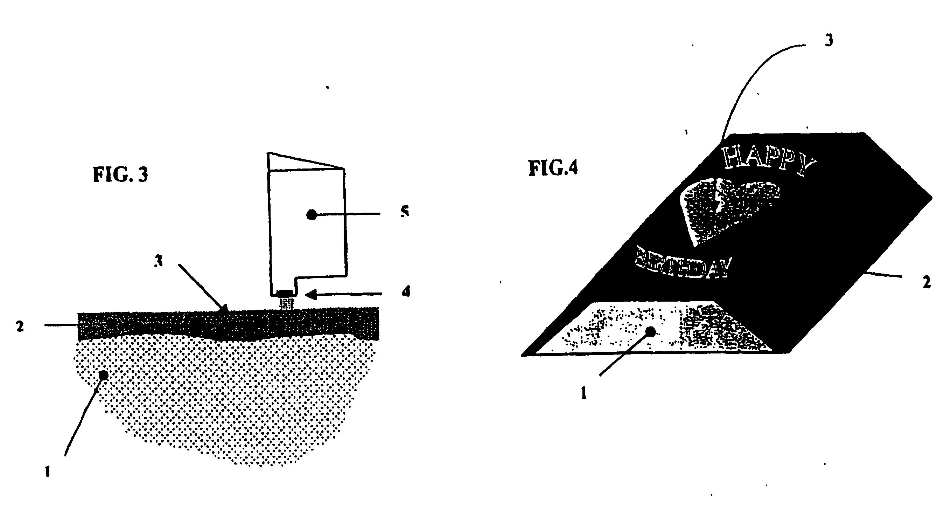

- Fig. 3: schematisch die Dekorationen 3, die mit Lebensmittelfarben auf wäßriger Basis 4 im Tintenstrahlverfahren 5 erhalten wurden
und
- Fig. 4: ein dekoriertes, im übrigen übliches Lebensmittelprodukt.

In den Figuren sind die einzelnen Teile wie folgt bezeichnet:
- 1: bezeichnet ein Lebensmittelprodukt,
- 2: bezeichnet den auf das Lebensmittelprodukt aufgebrachten Oberflächenüberzugsfilm,
- 3: bezeichnet die auf den Oberflächenüberzugsfilm des Lebensmittelproduktes aufgebrachten Dekorationen,
- 4: bezeichnet die Düsen für die Lebensmittelfarbe auf wäßriger Basis
und
- 5: bezeichnet die computergesteuerten Tintenstrahlköpfe.

Die Figuren zeigen die Einfachheit des erfindungsgemäßen Verfahrens, die Zuverlässigkeit der technologischen Arbeitsschritte dieses Verfahrens, die Wirtschaftlichkeit der Durchführung und die Vielfalt der programmierbaren Dekorationen. Es versteht sich von selbst, daß mit dem erfindungsgemäßen Verfahren schnell eine große Palette von nicht eintönigen Dekorationen erhalten werden kann.

## Patentansprüche

1. Verfahren zum Dekorieren von Oberflächen von Lebensmittelprodukten durch Aufbringen der Dekoration und eines hydrophilen Mediums auf die Oberfläche des Lebensmittelproduktes, **dadurch gekennzeichnet, daß** man das Aufbringen des hydrophilen Mediums als Vorbehandlung vor dem Aufbringen der Dekoration in Form von Farbe auf wässriger Basis durchführt und es unter Bildung eines Oberflächenüberzugsfilmes oder -geles trocknet.

2. Verfahren nach Anspruch 1, **dadurch gekennzeichnet, daß** man das Aufbringen der Dekoration auf den Oberflächenüberzugsfilm mit Hilfe des Tintenstrahlverfahrens mit Lebensmittelfarben auf wäßriger Basis durchführt.

3. Verfahren nach einem der vorhergehenden Ansprüche, **dadurch gekennzeichnet, daß** man als Oberflächenüberzugsfilm einen solchen aus für die Lebensmittelanwendung geeigneten und/oder eßbaren hydrophilen Materialien und/oder Lebensmittelprodukten, die das in der Farbe enthaltene Wasser aufzunehmen und die Farbstoffe auf der Oberfläche des Lebensmittelproduktes zu fixieren vermögen, einsetzt.

4. Verfahren nach einem der vorhergehenden Ansprüche, **dadurch gekennzeichnet, daß** man als Oberflächenüberzugsfilm einen solchen aus einem oder mehr Polysaccharid (en), insbesondere [einer], gegebenenfalls modifizierten, Stärke (n) und/oder Cellulose (n) und/oder Pektin (en) und/oder dessen/deren Derivat (en) verwendet.

5. verfahren nach einem der vorhergehenden Ansprüche, **dadurch gekennzeichnet daß** man als oberflächenüberzugsfilm einen solchen aus einem oder mehr Protein (en), insbesondere Gelatine und/oder Fischleim, verwendet.

6. Verfahren nach einem der vorhergehenden Ansprüche, **dadurch gekennzeichnet, daß** man als Oberflächenüberzugsfilm einen solchen, welcher weiße oder farbige Lebensmittelpigmente oder Kombinationen von solchen enthält, verwendet.

7. Verfahren nach einem der vorhergehenden Ansprüche, **dadurch gekennzeichnet, daß** man als Lebensmittelprodukte solche mit poröser und/oder rauher Oberfläche, insbesondere Kekse, Waffeln, sonstige Backwaren oder Salzgebäck, verwendet.

8. Verfahren nach einem der vorhergehenden Ansprüche, **dadurch gekennzeichnet, daß** man das Lebensmittelprodukt, auf dessen behandelter Oberfläche die Dekorationen im Tintenstrahlverfahren mit Lebensmittelfarbe auf wäßriger Basis durchgeführt worden sind, im Ofen bäckt.

9. An der Oberfläche dekorierte Lebensmittelprodukte, erhältlich durch das Verfahren nach einem der vorhergehenden Ansprüche.

## Claims

1. A method for the decoration of surfaces of food products by applying said decoration and a hydrophilic medium onto the surface of said food product,
**characterised in that**
said applying of said hydrophilic medium is carried out as a pretreatment prior to said applying of said decoration in the form of a water based colour and that it is dried under the formation of a surface-coating film or gel.

2. A method according to claim 1
**characterised in that**
said applying of said decoration onto said surface coating film is carried out by means of the inkjet-method using water based food colours.

3. A method according to anyone of the preceding claims
**characterised in that**
as a surface-coating film one made of food products and/or hydrophilic materials being suitable for food application and/or eatable, which are able to absorb the water contained in the colour and to fix the dyes on the surface of said food product is used,

4. A method according to anyone of the preceding claims
**characterised in that**
as a surface-coating film one made of one or more polysaccharide(s), Particularly [one], if necessary modified, starch(es) and/or cellulose(s) and/or pectin(es) and/or its/their derivative(s) is used.

5. A method according to anyone of the preceding claims
**characterised in that**
as a surface-coating film one made of one or more protein(es), particularly gelatine and/or fish glue is used.

6. A, method according to anyone of the preceding claims
**characterised in that**
as a surface-coating film one containing white or coloured food pigments or combinations thereof is used.

7. A method according to anyone of the preceding claims
**characterised in that**
as food products such having a porous and/or rough surface, particularly biscuits, wafers, miscellaneous pastries or savoury biscuits are used.

8. A method according to anyone of the preceding claims
**characterised in that**
the food product on the treated surface of which said decorations have been carried out by means of the inkjet-method using a water based food colour is baked.

9. Surface decorated food products which are obtainable by the method according to anyone of the preceding claims.

## Revendications

1. Procédé pour la décoration de surfaces de produits alimentaires par application de la décoration et d'une substance hydrophile sur la surface du produit alimentaire, **caractérisé en ce qu'**on effectue l'application de la substance hydrophile en tant que prétraitement avant l'application de la décoration sous forme de colorant à base aqueuse et que ladite substance sèche en formant un film ou une gelée de revêtement de surface.

2. Procédé selon la revendication 1, **caractérisé en ce qu'**on effectue l'application de la décoration sur le film de revêtement de surface à l'aide d'un procédé par impression à jet d'encre avec des colorants alimentaires à base aqueuse.

3. Procédé selon l'une quelconque des revendications précédentes, **caractérisé en ce qu'**on met en oeuvre en tant que film de revêtement de surface un film réalisé à partir de produits alimentaires et/ou de matériaux hydrophiles comestibles et/ou convenant pour l'utilisation alimentaire capables d'absorber l'eau contenue dans les colorants et de fixer le colorant sur la surface du produit alimentaire.

4. Procédé selon l'une quelconque des revendications précédentes, **caractérisé en ce qu'**on utilise en tant que film de revêtement de surface un film réalisé à partir d'un ou plus polysaccharide(s), en particulier [un] des amidon(s), éventuellement modifié(s), et/ou une (des) cellulose(s) et/ou une (des) pectine(s) et/ou leur(s) dérivé(s).

5. Procédé selon l'une quelconque des revendications précédentes, **caractérisé en ce qu'**on utilise en tant que film de revêtement de surface un film réalisé à partir d'une ou plus protéine(s), en particulier de la gélatine et/ou de la colle de poisson.

6. Procédé selon l'une quelconque des revendications précédentes **caractérisé en ce qu'**on utilise en tant que film de revêtement de surface un film qui contient des pigments alimentaires blancs ou colorés ou des combinaisons de ceux-ci.

7. Procédé selon l'une quelconque des revendications précédentes, **caractérisé en ce qu'**on utilise en tant que produits alimentaires ceux à surface poreuse et/ou rugueuse, en particulier des gâteaux secs, des gaufres, d'autres produits de boulangerie ou des biscuits salés.

8. Procédé selon l'une quelconque des revendications précédentes, **caractérisé en ce qu'**on cuit au four le produit alimentaire, sur la surface traitée duquel les décorations ont été effectuées par un procédé d'impression à jet d'encre avec des colorants alimentaires à base aqueuse.

9. Produits alimentaires décorés sur leur surface réalisés par le procédé selon l'une quelconque des revendications précédentes.
